# EUROPÄISCHE PATENTSCHRIFT

(11) **EP 2 409 261 B1**
(45) Veröffentlichungstag und Bekanntmachung des Hinweises auf die Patenterteilung: **15.06.2016**
(21) Anmeldenummer: 09807573.2
(22) Anmeldetag: 17.12.2009
(51) Int. Cl.: G06K 19/077

(54) **VERFAHREN ZUM HERSTELLEN EINER EINE KONTAKTLOSE UND EINE KONTAKTBEHAFTETE SCHNITTSTELLE AUFWEISENDEN CHIPKARTE**
METHOD FOR PRODUCING A SMART CARD WHICH HAS A CONTACTLESS INTERFACE AND AN INTERFACE WITH CONTACTS
PROCÉDÉ DE FABRICATION D'UNE CARTE À PUCE PRÉSENTANT UNE INTERFACE SANS CONTACT ET UNE INTERFACE À CONTACTS

(30) Priorität: 21.03.2009 DE 102009014343
(43) Veröffentlichungstag der Anmeldung: 25.01.2012
(73) Patentinhaber: Deutsche Telekom AG, 53113 Bonn (DE)
(72) Erfinder: MOOS, Rainer, 57080 Siegen (DE)
(74) Vertreter: Blumbach Zinngrebe
(86) Internationale Anmeldenummer: PCT/DE2009/001782
(87) Internationale Veröffentlichungsnummer: WO 2010/108463

(56) Entgegenhaltungen:
- EP-A2- 1 930 845
- DE-A1- 4 105 869
- DE-A1-102007 044 482
- US-A- 5 612 532
- US-A- 5 617 297

## Beschreibung

Die Erfindung betrifft ein Verfahren zum Herstellen einer eine kontaktlose und eine kontaktbehaftete Schnittstelle aufweisenden Chipkarte, welche auch als Dual Interface Chipkarte bekannt ist.

In den letzten Jahren haben sich in zahlreichen Bereichen Plastikkarten in Scheckkartenformat für vielfältige Anwendungen etabliert. Anfangs wurden diese Karten lediglich bedruckt. Danach entwickelten sich Hochprägesysteme, bei denen die geprägte Information mittels mechanischer Systeme auf Papier übertragen wurde. In der nächsten Technologiestufe wurden Magnetstreifen auf die Plastikkarten aufgebracht. Mit geeigneten Lesegeräten kann die magnetische gespeicherte Information ausgelesen werden. Später wurden kleine Speicherchips mit vergoldeten Kontaktflächen hergestellt. Anfangs konnten lediglich Daten auf diesen kleinen Speicherchips gespeichert werden.

Eine entscheidende Weiterentwicklung stellen nunmehr die sogenannten Smart Cards, das sind intelligente Chipkarten, dar. Eine Smart Card enthält einen aktiven Prozessorchip, der in der Lage ist, die gespeicherten Informationen aktiv zu schützen und zu verarbeiten. Mittlerweile sind hochentwickelte Kryptoalgorithmen in den Prozessorchips implementiert, um Daten ver- und entschlüsseln zu können. Dadurch konnten sich die Smart Cards als hochsichere Schlüsselträger und -computer für vielfältige Anwendungen durchsetzen.

Bekannt sind Chipkarten, die lediglich eine kontaktbehaftete Schnittstelle aufweisen. Die eingesetzten Chips werden hierbei als Module vorgefertigt und in eine zum Modul passende Mulde, die an der entsprechenden Stelle in einen Kartenkörper eingefräst worden ist, oberflächenbündig eingeklebt.

Ferner entstanden beispielsweise für Gebäude-Zutrittssysteme Chipkarten mit einfachen integrierten Technologien für berührungsloses Ausgeben von Informationen. Chipkarten mit kontaktlosen Schnittstellen haben verschiedene Vorteile. So können Daten berührungslos ein- und ausgelesen werden. Diese Geräte können deshalb besser gegen Vandalismus geschützt werden. Die kontaktlose Schnittstelle wird hier beispielsweise durch eine Antenne in Form einer Drahtwicklung im Kartenkörper realisiert, über die mittels Funkwellen nicht nur die Energieversorgung, sondern auch der Informationsaustausch stattfindet. Bei der Herstellung von kontaktlosen Chipkarten wird zunächst das Chipmodul mit der Antenne verbunden. Der Antennendraht wird hierzu direkt am Chipmodul angelötet. Die so gefertigte elektrische Baugruppe aus Chipmodul und Antenne wird anschließend üblicherweise in Form einer Inlayfolie in einen Kartenkörper einlaminiert.

Eine nächste Weiterentwicklung der Chipkarten führte zu sogenannten Dual Interface Chipkarten, die sowohl eine kontaktlose als auch eine kontaktbehaftete Schnittstelle besitzen.

Die wesentlichen Bestandteile einer solchen Dual Interface Chipkarte sind ein Chipmodul, eine Antenne sowie ein Kartenkörper, die alle in separaten Teilproduktionen, zumeist auch an unterschiedlichen Fertigungsorten hergestellt werden. Der vorgefertigte Kartenkörper besteht in der Regel aus laminierten Kunststofffolien oder Vollkunststoff. Die Herstellung der ganzen Chipkarte erfolgt meist an einem separaten Fertigungsort. Auch die Personalisierung der Chipkarte einschließlich einer elektronischen Codierung des Chipmoduls sowie das Aufbringen von optischen Informationen, wie zum Beispiel Passbilder, Namen und Vornamen findet wiederum meist räumlich und zeitlich getrennt von der Kartenfertigung statt.

Aus der US 5,612,532 ist eine solche Dual Interface Chipkarte sowie ein Verfahren zur Herstellung einer solchen Chipkarte bekannt. Die bekannte IC-Karte weist eine laminierte Struktur auf. Die laminierte Struktur besteht aus drei Platten, nämlich zwei Isolationsplatten und einer Leiterplatte. Erst nachdem die laminierte Struktur hergestellt worden ist, wird zur Fertigstellung der IC-Karte ein IC-Modul in eine entsprechende Aussparung eingesetzt. Gemäß einer alternativen IC-Karte wird zunächst ein kartenähnlicher Träger, welcher zumindest eine Antenne aufweist, hergestellt. Zur Fertigstellung der IC-Karte wird dann ein IC-Modul in eine entsprechende Aussparung des kartenähnlichen Trägers eingesetzt.

Aus der US 5,617,297 A ist ein Verfahren zur Herstellung einer eingekapselten gedruckten Leiterplatte bekannt. Hierzu wird ein Spritzgießverfahren verwendet, nach welchem in einem einzigen Arbeitsschritt die gedruckte Leiterplatte eingekapselt wird.

Aus der EP 1 930 845 A2 ist ein Verfahren zur Montage einer drahtlosen elektronischen Komponente an einer thermoplastischen Baugruppe bekannt. Hierzu wird die drahtlose elektronische Komponente in ein einseitig geöffnetes Gehäuse aus einem thermoplastischen Material eingesetzt. Danach wird die Öffnung mittels eines thermoplastischen Materials verschlossen, um die elektronische Komponente vollständig einzukapseln. Nunmehr kann die eingekapselte elektronische Komponente mit der thermoplastischen Baugruppe verbunden werden.

Bei der Herstellung von Dual Interface Karten kann es zu fehlerhaften elektrischen Verbindungen zwischen Antenne und Chipmodul kommen. Denn die Antenne wird bereits während der Fertigung des Kartenkörpers eingebracht. Die Antennendrähte werden daher erst beim Einsetzen des Chipmoduls elektrisch mit dem Chipmodul verbunden oder nachträglich an den entsprechenden Kontaktflächen des Chips elektrisch leitend befestigt.

Der Erfindung liegt daher die Aufgabe zugrunde, ein Verfahren zur Herstellung von Dual Interface Chipkarten, also Chipkarten mit einer kontaktlosen und einer kontaktbehafteten Schnittstelle zur Verfügung zu stellen, welches eine sichere elektrische Verbindung zwischen einer drahtlosen Sende-/Zmpfangseinrichtung und dem Chipmodul ermöglicht. Darüber hinaus ermöglicht das Verfahren, den Herstellungsprozess einer solchen Chipkarte zu optimieren, indem zumindest einige der Herstellungsschritte an ein und demselben Fertigungsort und bevorzugt parallel ausgeführt werden können.

Ein Kerngedanke der Erfindung ist darin zu sehen, den Herstellungsprozess von Dual Interface Chipkarten zu verbessern. Dazu werden die Kartenkörper nicht mehr aus einzelnen, vorgefertigten laminierten Schichten aufgebaut, sondern durch Schichten, die während der Fertigstellung der Chipkarte unter Anwendung geeigneter Verfahren Lage für Lage hergestellt werden.

Ein weiterer Aspekt der Erfindung kann darin gesehen werden, bei einer Dual Interface Chipkarte eine zuverlässige elektrische Verbindung zwischen einer drahtlosen Sende-/Empfangseinrichtung, insbesondere eine Antenne, und einem Chipmodul herzustellen, wie sie bei Chipkarten, die lediglich eine kontaktlose Schnittstelle aufweisen, möglich ist.

Das oben genannte technische Problem wird durch die Verfahrensschritte der unabhängigen Ansprüche gelöst.

Danach wird ein Verfahren zum Herstellen einer eine kontaktlose und eine kontaktbehaftete Schnittstelle aufweisenden Chipkarte zur Verfügung gestellt, welches folgende Verfahrensschritte umfasst:
Herstellen einer ersten Schicht eines zu fertigenden Kartenkörpers;
Anordnen einer elektrischen Baugruppe wenigstens abschnittsweise an der ersten Schicht, wobei die elektrische Baugruppe ein elektrische Kontaktflächen aufweisendes Chipmodul und wenigstens eine daran elektrisch anschließbare drahtlose Sende-/Empfangseinrichtung umfasst, wobei das Chipmodul mit Bezug auf die äußere Umrandung der ersten Schicht an einer vordefinierten Stelle positioniert wird;
Herstellen wenigstens einer weiteren Schicht auf der ersten Schicht zur Fertigstellung des Kartenkörpers, und zwar derart, dass die Sende-/Empfangseinrichtung vollständig im Kartenkörper eingebettet ist und die Kontaktflächen des Chipmoduls für einen externen kontaktbehafteten Anschluss frei zugänglich sind, wobei die den Kartenkörper bildenden Schichten unter Anwendung eines 3D-Druckverfahrens hergestellt werden.

Jede Schicht kann mehrere Teilschichten umfassen.

Mit dem Verfahrensschritt, dass das Chipmodul an einer vordefinierten Stelle positioniert wird, wird dem Umstand Rechnung getragen, dass für eine Chipkartenfertigung die Kontaktflächen des Chipmoduls unter Einhaltung gängiger Normen passgenau positioniert werden müssen.

Angemerkt sei an dieser Stelle bereits, dass all die genannten Verfahrensschritte an einem einzigen Fertigungsort, vorzugsweise in einer entsprechend ausgebildeten Fertigungsanlage ausgeführt werden können. Die Reihenfolge, in der die Verfahrensschritte genannt worden sind, gibt nicht notwendigerweise deren chronologische Ausführung wieder.

Vorprodukte, wie das Chipmodul und gegebenenfalls die drahtlose Sende-/Empfangseinrichtung können, müssen aber nicht, zeitlich und/oder räumlich getrennt von der eigentlichen Chipkartenfertigung entstehen.

Bei der drahtlosen Sende-/Empfangseinrichtung kann es sich zum Beispiel um eine Antenne oder Infrarot-Schnittstelle handeln.

Eine sichere elektrische Verbindung zwischen dem Chipmodul und der drahtlosen Sende-/Empfangseinrichtung kann dadurch erzielt werden, dass die drahtlose Sende-/Empfangseinrichtung im Chipmodul angeordnet ist.

Als 3D-Fertigungstechniken kann zum Beispiel die Stereolithographie oder das Lasersintern, das auch als 3D-Drucken bekannt ist, angewandt werden. Beim Lasersintern wird der Kartenkörper durch schichtweisen Aufbau von Partikeln hergestellt, die durch Impulse von außen an der richtigen Stelle ausgehärtet werden.

Bei Anwendung eines 3D-Fertigungsverfahrens werden Kunststoffpartikel zur Herstellung der Schichten bereitgestellt, wobei jede Schicht aus mindestens einer Teilschicht oder Lage aus Kunststoffpartikeln hergestellt wird.

Die eingesetzten Kunststoffmaterialien sind so zu wählen, dass die Materialeigenschaften des fertig gestellten Kartenkörpers hinsichtlich der Biege- und Torsionsfestigkeit sowie wie zum Beispiel der Abriebfestigkeit und Formstabilität innerhalb genormter Toleranzen liegen.

Um den Herstellungsprozess von Chipkarten weiter optimieren zu können, kann der Schritt des Anordnens der elektrischen Baugruppe folgende Schritte umfassen: Es werden elektrisch leitfähige Partikel in die erste und/oder zweite Schicht zur Herstellung der drahtlosen Sende-/Empfangseinrichtung und/oder deren Anschlussdrähte eingearbeitet. Ferner wird zwischen der drahtlosen Sende-/Empfangseinrichtung und dem Chipmodul eine elektrische Verbindung hergestellt. Auf diese Weise ist es nicht mehr erforderlich, die Sende-/Empfangseinrichtung als Vorprodukt herzustellen. Statt dessen entsteht die Sende-/Empfangseinrichtung während der Herstellung des Kartenkörpers am gleichen Fertigungsort, vorzugsweise in der gleichen Fertigungsanlage.

Eine weitere Optimierung des Herstellungsverfahrens wird in vorteilhafter Weise dadurch erreicht, dass durch gezieltes Einfärben von Kunststoffpartikeln beim Herstellen der Schichten des Kartenkörpers ein optisches Layout und/oder eine optische Individualisierung in der ersten und/oder zweiten Schicht erzeugt werden kann. Auch dieser Verfahrensschritt wird während der Herstellung der Chipkarte am selben Fertigungsort ausgeführt.

Werden 3D-Fertigungsverfahren zur Herstellung des Kartenkörpers angewandt, können thermochromische und/oder magnetische Partikel bereitgestellt werden. Thermochromische und/oder magnetische Partikel können dann während der Herstellung der den Kartenkörper bildenden Schichten in wenigstens eine der Schichten gezielt eingebracht werden, um wenigstens einen thermochromischen Bereich und/oder magnetisierten Bereich zu erzeugen.

Angemerkt sei, dass die Herstellung einer Schicht unter Anwendung eines 3D-Fertigungsverfahrens in mehreren Unterschritten, erfolgen kann, wobei in jedem Unterschritt eine Teilschicht hergestellt wird.

Um bei der Fertigung der Chipkarte eine zuverlässige elektrische Verbindung zwischen der drahtlosen Sende-/Empfangseinrichtung und dem Chipmodul sicherstellen zu können, wird zunächst die drahtlose Sende-/Empfangseinrichtung und dem Chipmodul elektrisch verbunden. Anschließend wird die elektrische Baugruppe auf der ersten Schicht angeordnet und die zweite Schicht derart auf der ersten Schicht hergestellt, dass die Sende-/Empfangseinrichtung vollständig im Kartenkörper eingebettet ist und die Kontaktflächen des Chipmoduls für einen externen kontaktbehafteten Anschluss frei zugänglich sind.

Eine zweckmäßige alternative Weiterentwicklung sieht vor, dass in der ersten Schicht an der vordefinierten Stelle eine Öffnung gebildet wird, in die das Chipmodul eingesetzt wird, und zwar so, dass die Kontaktflächen des Chipmoduls von der Unterseite der ersten Schicht frei zugänglich sind. Diese Öffnung entsteht während der Herstellung der ersten Schicht; sie wird also nicht nachträglich, beispielsweise durch mechanisches Stanzen oder Aussägen gebildet.

Eine weitere Optimierung erfährt das Herstellungsverfahren dadurch, dass während der Herstellung der Schichten das Chipmodul bereits elektrisch codiert werden kann, und zwar vorzugsweise über die kontaktlose Schnittstelle, also die Sende-/Empfangseinrichtung.

In vorteilhafter Weise wird hierzu eine Fertigungsanlage geschaffen, welche die erforderlichen Codierungskomponenten aufweist.

Mittlerweile gibt es Verfahren, die das Aufdrucken von Batterien zur Spannungsversorgung beispielsweise auf Papier ermöglichen. Unter Anwendung einer solchen Technik oder noch neu zu entwickelnder Techniken sieht eine vorteilhafte Weiterentwicklung vor, dass auf oder innerhalb einer der Schichten eine Energieversorgungseinrichtung hergestellt und mit dem Chipmodul elektrisch verbunden wird. Die integrierte Energieversorgungseinrichtung ermöglicht, dass die Ansprechschwelle bei berührungsloser Bedienung der fertigen Chipkarte gesenkt und damit die Reichweite der Bedienbarkeit erhöht werden kann. Auch dieser Prozessschritt wird während der Herstellung der Chipkarte ausgeführt.

Die Erfindung wird nachfolgend anhand zweier Ausführungsbeispiele in Verbindung mit den beiliegenden Zeichnungen näher erläutert. Es zeigen:
- Fig. 1: eine Dual Interface Chipkarte, welche gemäß dem Verfahren nach der Erfindung hergestellt worden ist, und
- Fig. 2: eine alternative Dual Interface Chipkarte, die nach einem Verfahren gemäß der Erfindung hergestellt worden ist.

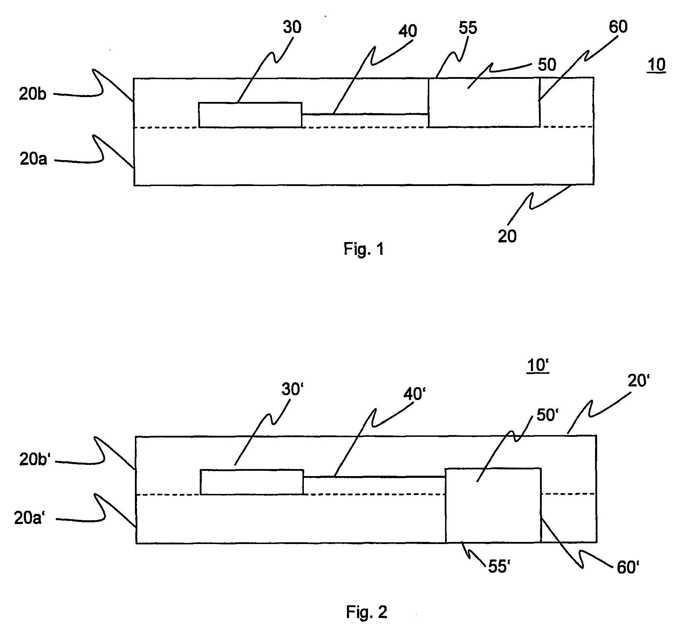

Fig. 1 zeigt eine Dual Interface Chipkarte 10, welche eine kontaktlose Schnittstelle sowie eine kontaktbehaftete Schnittstelle aufweist. Die kontaktlose Schnittstelle wird durch drahtlose Sende-/Empfangseinrichtung 30 gebildet, welche über eine elektrische Verbindung 40 mit einem Chipmodul 50 verbunden ist. Die drahtlose Sende-/Empfangseeinrichtung 30 ist im vorliegenden Beispiel eine Antenne, die als Drahtwicklung ausgebildet sein kann. Die kontaktbehaftete Schnittstelle wird durch Kontaktflächen des Chipmoduls 50 gebildet, die lediglich durch das Bezugszeichen 55 angedeutet werden. Die in Fig. 1 dargestellte gestrichelte Trennlinie deutet an, dass zunächst, in einem 3D- Fertigungsverfahren eine erste Schicht 20a und danach eine zweite Schicht 20b hergestellt worden sind, die einen Kartenkörper 20 bilden. Jede Schicht wird durch eine Vielzahl von Teilschichten gebildet. Die Trennlinie ist jedoch nicht als physikalische oder chemische Trennfläche bzw. Nahtstelle zwischen den beiden Schichten 20a und 20b zu verstehen. In der Regel ist der Übergang von der ersten zur zweiten Schicht nahtlos, im Unterschied zu laminierten Kartenkörpern. Die Antenne 30 und das Chipmodul 50 sind beispielsweise auf der ersten Schicht 20a angeordnet. Wie aus Fig. 1 ersichtlich, liegt das Chipmodul 50 in einer Öffnung 60 der zweiten Schicht 20b. Die Kontaktflächen 55 des Chipmoduls 50 sind von der Oberseite der zweiten Schicht 20b des Kartenkörpers 20 frei zugänglich.

Fig. 2 zeigt eine der Chipkarte 10 sehr ähnliche Chipkarte 10'. Die Chipkarte 10' unterscheidet sich im Wesentlichen lediglich dadurch von der Chipkarte 10, dass die kontaktbehaftete Schnittstelle durch Kontaktflächen 55' eines Chipmoduls 50' gebildet wird, die von der Unterseite der zuerst hergestellten Schicht 20a' eines Kartenkörpers 20' frei zugänglich sind. Ansonsten weist der Kartenkörper 20' eine zweite Schicht 20b' auf, welche eine elektrische Baugruppe vollständig abdeckt. Die elektrische Baugruppe umfasst wiederum eine Antenne 30' und das Chipmodul 50', die über eine elektrische Verbindung 40' fest miteinander verbunden sind. Die elektrische Baugruppe kann als Vorprodukt bereitgestellt werden.

Nachfolgend wird ein beispielhaftes Verfahren zur Herstellung der Chipkarte 10', welche in Fig. 2 gezeigt ist, näher erläutert.

Angenommen sei, dass die Chipkarte 10' mittels eines 3D-Fertigungsverfahrens, beispielsweise dem Lasersintern hergestellt werden soll. Weiterhin sei angenommen, dass die Antenne 30' mit dem Chipmodul 50' elektrisch verbunden ist. Antenne und Chipmodul bilden eine elektrische Baugruppe, die in der Regel in einem separaten Schritt hergestellt wird.

Geeignete Kunststoffpartikel werden in einem entsprechenden Vorratsbehälter bereitgehalten. Zur Herstellung der ersten Schicht 20a' werden Kunststoffpartikel Lage für Lage, also Teilschicht für Teilschicht auf einer geeigneten Bearbeitungsfläche aufgebracht und anschließend an den vordefinierten Stellen ausgehärtet, so dass sich eine erste Schicht 20a' bildet, die den Abmessungen einer genormten Chipkarte entspricht und eine Öffnung 60' aufweist. Die Öffnung 60' befindet sich mit Bezug auf die Umrandung der ersten Schicht 20a' an einer vordefinierten Position, so dass, wenn das Chipmodul 50' in der Öffnung 60' eingesetzt ist, dessen Kontaktflächen 55' präzise an dem durch gängige Normen definierten Bereich positioniert sind. Die Höhe der ersten Schicht 20a wird so gewählt, dass im eingesetzten Zustand das Chipmodul 50' zumindest teilweise von der Öffnung 60' aufgenommen wird und die Antenne auf der ersten Schicht 20a' aufliegt, ohne dass die elektrische Verbindung 40 beschädigt wird. Nunmehr wird die elektrische Baugruppe aus Antenne 30' und Chipmodul 50' auf der ersten Schicht 20a' positioniert.

Im nächsten Schritt werden wieder Kunststoffpartikel Lage für Lage auf die erste Schicht 20a' aufgebracht und an den vorbestimmten Bereichen ausgehärtet, bis der Kartenkörper 20' fertig_gestellt ist. Die zweite Schicht 20b' deckt im fertig_gestellten Zustand die Antenne 30', die elektrische Verbindung 40' und das Chipmodul 50' vollständig ab. Da das Chipmodul 50' im vorliegenden Beispiel aus der Öffnung 60' herausragt, entsteht bei der Herstellung der zweiten Schicht 20b' an der entsprechenden Stelle eine Aussparung.

In einem zusätzlichen Prozessschritt können bereits während des Herstellens des Kartenkörpers 20' ein graphisches Layout und/oder eine optische Personalisierung der Chipkarte 10' erzeugt werden. Beispielsweise können verschieden gefärbte Kunststoffpartikel, die in entsprechenden Behältern vorgehalten werden, zusammen mit ungefärbten Kunststoffpartikeln in entsprechenden Teilschichten aufgebracht und ausgehärtet werden, so dass an der Oberfläche oder innerhalb der ersten und/oder zweiten Schicht das gewünschte Layout und/oder die gewünschte optische Personalisierung entsteht. Alternativ können Kunststoffpartikel auch erst bei der Herstellung einer Schicht, und zwar Lage für Lage eingefärbt werden. Dank dieses Prozessschritts ist es nicht mehr erforderlich, ein graphisches Layout oder eine optische Personalisierung erst nach der Herstellung des Kartenkörpers 20' in einem separaten Schritt auf der Oberfläche aufzubringen. Vielmehr entsteht das optische Layout und/oder die optische Personalisierung in einem gemeinsamen Schritt bei der Herstellung des Kartenkörpers 20'.

Da die zu fertigende Chipkarte 10' eine kontaktlose Schnittstelle zur Verfügung stellt, kann gleichzeitig mit der Herstellung des Kartenkörpers 20' das Chipmodul 50' elektrisch codiert und gegebenenfalls auch personalisiert werden.

Dank des beschriebenen Verfahrens können zahlreiche Verfahrensschritte zur Herstellung einer Dual Interface Chipkarte parallel und am gleichen Ort, vorzugsweise in einer gemeinsamen Fertigungsanlage, ausgeführt werden.

Ein weiterer Herstellungsschritt, der in das Herstellungsverfahren integriert werden kann, ermöglicht, dass elektrisch leitfähige Partikel beispielsweise beim Herstellen der ersten Schicht 20a' an vorbestimmten Stellen zusammen mit den Kunststoffpartikeln aufgebracht werden, so dass nach dem Aushärten der Kunststoffpartikel an der Oberfläche oder innerhalb der ersten Schicht 20a' die Antenne 30' und/oder deren Anschlussdrähte 40' hergestellt werden. Die elektrisch leitfähigen Partikel können in einem Behälter aufbewahrt sein.

Darüber hinaus ist es möglich, thermochromische und/oder magnetische Partikel gezielt den Kunststoffpartikeln beizumengen, so dass beispielsweise in der Schicht 20a' in einer oder mehreren Teilschichten und an vordefinierten Stellen Magnetstreifen oder thermochromische Bereich gedruckt werden können.

Denkbar ist ferner, Partikel mit definierten Eigenschaften zur Herstellung einer gedruckter Energieversorgungseinrichtung bereitzustellen. Eine solche Energieversorgungseinrichtung kann beispielsweise innerhalb oder an der ersten oder zweiten Schicht des Kartenkörpers 20' hergestellt und anschließend elektrisch mit dem Chipmodul 50' verbunden werden.

Denkbar ist ferner, dass eine drahtlose Sende-/Empfangseinrichtung, zum Beispiel eine Antenne, in einem Chipmodul angeordnet wird, so dass das Chipmodul vor Beginn der Herstellung eines Kartenkörpers zunächst an einer definierten Stelle auf einer Bearbeitungsfläche einer Fertigungsanlage positioniert wird. Anschließend werden Schichten in einem Herstellungsschritt, und zwar Teilschicht für Teilschicht um das Chipmodul herum hergestellt, wobei in vorbestimmbaren Teilschichten Magnetstreifen, thermochromische Bereiche, graphische Layouts, optische Personalisierungen und/oder weitere elektronische Komponenten hergestellt werden können. Ist die Antenne nicht im Chipmodul angeordnet, kann sie ebenfalls während der Fertigung des Kartenkörpers in wenigstens einer vorbestimmten Teilschicht unter Einbringung elektrisch leitfähiger Partikel hergestellt werden. In diesem Fall ist darauf zu achten, dass eine fehlerfreie elektrische Verbindung zwischen Antenne und Chipmodul hergestellt wird.

## Patentansprüche

1. Verfahren zum Herstellen einer eine kontaktlose und eine kontaktbehaftete Schnittstelle aufweisenden Chipkarte (10), mit folgenden Schritten:
- Herstellen einer ersten Schicht (20a) eines zu fertigenden Kartenkörpers (20);
- Anordnen während der Herstellung des zu fertigenden Kartenkörpers (20) einer elektrischen Baugruppe wenigstens abschnittsweise an der ersten Schicht (20a), wobei die elektrische Baugruppe ein elektrische Kontaktflächen (55) aufweisendes Chipmodul (50) und wenigstens eine daran elektrisch anschließbare drahtlose Sende-/Empfangseinrichtung (30) umfasst, wobei das Chipmodul (50) mit Bezug auf die äußere Umrandung der ersten Schicht (20a) an einer vordefinierten Stelle positioniert wird;
- Herstellen wenigstens einer weiteren Schicht (20b) auf der ersten Schicht (20a) zur Fertigstellung des Kartenkörpers (20), und zwar derart, dass die Sende-/Empfangseinrichtung (30) vollständig im Kartenkörper (20) eingebettet ist und die Kontaktflächen (55) des Chipmoduls (50) für einen externen kontaktbehafteten Anschluss frei zugänglich sind, wobei die den Kartenkörper (20) bildenden Schichten (20a, 20b) unter Anwendung eines 3D-Druckverfahrens hergestellt werden.

2. Verfahren nach Anspruch 1,
**dadurch gekennzeichnet, dass**
Kunststoffpartikel zur Herstellung der Schichten (20a, 20b) bereitgestellt werden.

3. Verfahren nach Anspruch 1 oder 2,
**dadurch gekennzeichnet, dass**
durch gezieltes Einfärben von Kunststoffpartikeln ein optisches Layout und/oder eine optische Individualisierung in der ersten Schicht (20a) und/oder in der zweiten Schicht (20b) erzeugt werden.

4. Verfahren nach einem der Ansprüche 1 bis 3,
**dadurch gekennzeichnet, dass**
thermochromische und/oder magnetische Partikel bereitgestellt werden, und dass beim Herstellen der Schichten (20a, 20b) in wenigstens einer der Schichten wenigstens ein thermochromischer Bereich und/oder wenigstens ein magnetisierter Bereich erzeugt wird.

5. Verfahren nach Anspruch 1 oder 4,
**dadurch gekennzeichnet, dass**
der Schritt des Anordnens der elektrischen Baugruppe folgende Schritte umfasst:
Einbringen elektrisch leitfähiger Partikel in die erste Schicht (20a) und/oder in die zweite Schicht (20b) zur Herstellung der drahtlosen Sende-/Empfangseinrichtung (30) und/oder deren Anschlussdrähte; und
Herstellen einer elektrischen Verbindung zwischen der drahtlosen Sende-/Empfangseinrichtung (30) und dem Chipmodul (50).

6. Verfahren nach einem der Ansprüche 1 bis 4,
**dadurch gekennzeichnet, dass**
die drahtlose Sende-/Empfangseinrichtung (30) und das Chipmodul (50) elektrisch verbunden werden, dass anschließend die elektrische Baugruppe auf der ersten Schicht (20a) angeordnet wird und dass die zweite Schicht (20b) derart auf der ersten Schicht (20a) hergestellt wird, dass die Sende-/Empfangseinrichtung (30) vollständig im Kartenkörper eingebettet ist und die Kontaktflächen (55) des Chipmoduls (50) für einen externen kontaktbehafteten Anschluss frei zugänglich sind.

7. Verfahren nach einem der Ansprüche 1 bis 6,
**dadurch gekennzeichnet, dass**
in der ersten Schicht (20a) an der vordefinierten Stelle eine Öffnung (60) gebildet wird, in die das Chipmodul (50) eingesetzt wird.

8. Verfahren nach einem der vorstehenden Ansprüche,
**dadurch gekennzeichnet, dass**
während der Herstellung der Schichten (20a, 20b) das Chipmodul (50) elektrisch kodiert wird.

9. Verfahren nach einem der vorstehenden Ansprüche,
**dadurch gekennzeichnet, dass**
auf oder innerhalb einer der Schichten eine Energieversorgungseinrichtung hergestellt und mit dem Chipmodul (50) elektrisch verbunden wird.

10. Verfahren nach einem der vorstehenden Ansprüche,
**dadurch gekennzeichnet, dass**
die drahtlose Sende-/Empfangseinrichtung (30) eine Antenne ist.

11. Verfahren zum Herstellen einer eine kontaktlose und eine kontaktbehaftete Schnittstelle aufweisenden Chipkarte (10), mit folgenden Schritten:
- vor der Herstellung eines Kartenkörpers (20, 20a, 20b) Positionieren einer elektrischen Baugruppe an einer definierten Stelle auf einer Bearbeitungsfläche einer Fertigungsanlage, wobei die elektrische Baugruppe ein elektrische Kontaktflächen (55) aufweisendes Chipmodul (50) und eine darin angeordnete drahtlose Sende-/Empfangseinrichtung (30) umfasst;
- Herstellen, in einem Herstellungsschritt, von Schichten um das Chipmodul (50) herum zur Herstellung des Kartenkörpers (20), wobei die den Kartenkörper (20) bildenden Schichten (20a, 20b) unter Anwendung eines 3D-Druckverfahrens hergestellt werden.

12. Verfahren zum Herstellen einer eine kontaktlose und eine kontaktbehaftete Schnittstelle aufweisenden Chipkarte (10), mit folgenden Schritten:
- vor der Herstellung eines Kartenkörpers (20, 20a, 20b) Positionieren eines elektrische Kontaktflächen (55) aufweisenden Chipmoduls an einer definierten Stelle auf der Bearbeitungsfläche einer Fertigungsanlage;
- Herstellen, in einem Herstellungsschritt, von Schichten um das Chipmodul (50) herum zur Fertigstellung des Kartenkörpers (20), wobei die den Kartenkörper (20) bildenden Schichten (20a, 20b) unter Anwendung eines 3D-Druckverfahrens hergestellt werden; und
- Herstellen einer drahtlosen Sende-/Empfangseinrichtung in einer vorbestimmten Schicht unter Einbringen elektrisch leitfähiger Partikel derart, dass eine elektrische Verbindung zwischen Sende-/Empfangseinrichtung und Chipmodul hergestellt wird.

13. Verfahren nach Anspruch 11 oder 12,
**dadurch gekennzeichnet, dass** in vorbestimmten Teilschichten Magnetstreifen, thermochromische Bereiche, graphische Layouts, optische Personalisierungen und/oder weitere elektronische Komponenten hergestellt werden.

## Claims

1. A method for manufacturing a smart card (10) which has a contactless interface and an interface with contacts, comprising the steps of:
- producing a first layer (20a) of a card body (20) to be manufactured;
- during the producing of the card body (20) to be manufactured, arranging at least some portions of an electrical assembly at the first layer (20a), wherein the electrical assembly comprises a chip module (50) having electrical contact surfaces (55), and at least one wireless transceiver means (30) electrically connectable thereto, wherein the chip module (50) is positioned at a predefined location with respect to the outer edge of the first layer (20a);
- producing at least one further layer (20b) on the first layer (20a) so as to complete the card body (20), and in such a manner that the transceiver means (30) is completely embedded in the card body (20) and so that the contact surfaces (55) of the chip module (50) are freely accessible for an external contact-type connection, wherein the layers (20a, 20b) forming the card body (20) are produced using a 3D printing process.

2. The method according to claim 1, **characterized in that** plastic particles are provided for producing the layers (20a, 20b).

3. The method according to claim 1 or 2, **characterized in that** a visual layout and/or visual individualization in the first layer (20a) and/or in the second layer (20b) is created by selectively dyeing plastic particles.

4. The method according to any of claims 1 to 3, **characterized in that** thermochromic and/or magnetic particles are provided, and that during the producing of the layers (20a, 20b) at least one thermochromic region and/or at least one magnetised region is produced in at least one of the layers.

5. The method according to claim 1 or 4, **characterized in that** the step of arranging the electrical assembly comprises the steps of:
- introducing electrically conductive particles into the first layer (20a) and/or into the second layer (20b) for producing the wireless transceiver means (30) and/or connecting wires thereof; and
- establishing an electrical connection between the wireless transceiver means (30) and the chip module (50).

6. The method according to any of claims 1 to 4, **characterized in that** the wireless transceiver means (30) and the chip module (50) are electrically connected, that subsequently the electrical assembly is arranged on the first layer (20a), and that the second layer (20b) is produced on the first layer (20a) in such a manner that the transceiver means (30) is completely embedded in the card body and the contact surfaces (55) of the chip module (50) are freely accessible for an external contact-type connection.

7. The method according to any of claims 1 to 6, **characterized in that** an opening (60) is formed in the first layer (20a) at the predefined location, into which the chip module (50) is inserted.

8. The method according to any of the preceding claims, **characterized in that** during the producing of the layers (20a, 20b), the chip module (50) is electrically encoded.

9. The method according to any of the preceding claims, **characterized in that** a power supply device is produced on or within one of the layers and is electrically connected to the chip module (50).

10. The method according to any of the preceding claims, **characterized in that** the wireless transceiver means (30) is an antenna.

11. A method for manufacturing a smart card (10) which has a contactless interface and an interface with contacts, comprising the steps of:
- prior to the producing of a card body (20, 20a, 20b), arranging an electrical assembly at a predefined location on a processing surface of a production line, said electrical assembly comprising a chip module (50) having electrical contact surfaces (55) and a wireless transceiver means (30) arranged therein;
- producing, in a single manufacturing step, layers around the chip module (50) for producing the card body (20), wherein the layers (20a, 20b) forming the card body (20) are produced using a 3D printing process.

12. A method for manufacturing a smart card (10) which has a contactless interface and an interface with contacts, comprising the steps of:
- prior to the producing of a card body (20, 20a, 20b), arranging a chip module having electrical contact surfaces (55) at a predefined location on a processing surface of a production line;
- producing, in a single manufacturing step, layers around the chip module (50) for completing the card body (20), wherein the layers (20a, 20b) forming the card body (20) are produced using a 3D printing process; and
- producing a wireless transceiver means in a predetermined layer by introducing electrically conductive particles in a manner so that an electrical connection is produced between the transceiver means and the chip module.

13. The method according to claim 11 or 12, **characterized in that** magnetic stripes, thermochromic regions, graphical layouts, visual personalization, and/or further electronic components are produced in predetermined sublayers.

## Revendications

1. Procédé de fabrication d'une carte à puce (10) présentant une interface sans contact et une interface à contacts, comprenant les étapes suivantes :
- la fabrication d'une première couche (20a) d'un corps de carte (20) à produire ;
- l'agencement, pendant la fabrication du corps de carte (20) à produire, d'un ensemble électrique au moins sur certaines parties sur la première couche (20a), l'ensemble électrique comportant un module à puce (50) présentant des surfaces de contact électriques (55) et au moins un dispositif d'émission/de réception (30) sans fil pouvant être connecté électriquement audit module à puce, le module à puce (50) étant positionné par rapport à la bordure extérieure de la première couche (20a) en un emplacement prédéfini ;
- la fabrication d'au moins une autre couche (20b) sur la première couche (20a) pour la production du corps de carte (20), et ce de telle manière que le dispositif d'émission/de réception (30) soit entièrement incorporé dans le corps de carte (20) et que les surfaces de contact (55) du module à puce (50) soient librement accessibles pour permettre une connexion externe à contacts, les couches (20a, 20b) formant le corps de carte (20) étant fabriquées en utilisant un procédé d'impression en 3D.

2. Procédé selon la revendication 1, **caractérisé en ce que** des particules de matière plastique permettant la fabrication des couches (20a, 20b) sont fournies.

3. Procédé selon la revendication 1 ou 2, **caractérisé en ce qu'**un encrage ciblé des particules de matière plastique permettent de produire une disposition optique et/ou une individualisation optique dans la première couche (20a) et/ou dans la deuxième couche (20b).

4. Procédé selon l'une quelconque des revendications 1 à 3, **caractérisé en ce que** des particules thermochromiques et/ou magnétiques sont fournies, et **en ce que**, lors de la fabrication des couches (20a, 20b), au moins une zone thermochromique et/ou au moins une zone magnétisée est produite dans au moins une des couches.

5. Procédé selon la revendication 1 ou 4, **caractérisé en ce que** l'étape de l'agencement de l'ensemble électrique comprend les étapes suivantes :
l'introduction de particules électroconductrices dans la première couche (20a) et/ou dans la deuxième couche (20b) de manière à fabriquer le dispositif d'émission/de réception (30) sans fil et/ou les fils de connexion de ce dernier ; et
l'établissement d'une liaison électrique entre le dispositif d'émission/de réception (30) sans fil et le module à puce (50).

6. Procédé selon l'une quelconque des revendications 1 à 4, **caractérisé en ce que** le dispositif d'émission/de réception (30) sans fil et le module à puce (50) sont reliés électriquement, **en ce que** l'ensemble électrique est ensuite disposé sur la première couche (20a) et **en ce que** la deuxième couche (20b) est fabriquée sur la première couche (20a), de telle manière que le dispositif d'émission/de réception (30) est entièrement incorporé dans le corps de carte et que les surfaces de contact (55) du module à puce (50) sont librement accessibles pour la mise en oeuvre d'une connexion externe à contacts.

7. Procédé selon l'une quelconque des revendications 1 à 6, **caractérisé en ce qu'**une ouverture (60) dans laquelle le module à puce (50) est inséré, est formée dans la première couche (20a) à l'emplacement prédéfini.

8. Procédé selon l'une quelconque des revendications précédentes, **caractérisé en ce que**, pendant la fabrication des couches (20a, 20b), le module à puce (50) est codé électriquement.

9. Procédé selon l'une quelconque des revendications précédentes, **caractérisé en ce qu'**un dispositif d'alimentation en énergie est fabriqué sur une des couches ou à l'intérieur de celle-ci et relié électriquement au module à puce (50).

10. Procédé selon l'une quelconque des revendications précédentes, **caractérisé en ce que** le dispositif d'émission/de réception (30) sans fil est une antenne.

11. Procédé de fabrication d'une carte à puce (10) comprenant une interface sans contact et une interface à contacts, ledit procédé comprenant les étapes suivantes :
- avant la fabrication d'un corps de carte (20, 20a, 20b), le positionnement d'un ensemble électrique en un emplacement défini sur une surface de traitement d'une installation de production, l'ensemble électrique comprenant un module à puce (50) présentant des surfaces de contact électriques (55) et un dispositif d'émission/de réception (30) sans fil disposé dans ledit module à puce ;
- la fabrication, au cours d'une étape de fabrication, de couches autour du module à puce (50) de manière à fabriquer le corps de carte (20), les couches (20a, 20b) formant le corps de carte (20) étant fabriquées au moyen d'un procédé d'impression 3D.

12. Procédé de fabrication d'une carte à puce (10) comprenant une interface sans contact et à contacts, ledit procédé comprenant les étapes suivantes :
- avant la fabrication d'un corps de carte (20, 20a, 20b), le positionnement d'un module à puce présentant des surfaces électriques en un emplacement défini sur la surface de traitement d'une installation de production ;
- la fabrication, au cours d'une étape de fabrication, de couches autour du module à puce (50) de manière à fabriquer le corps de carte (20), les couches (20a, 20b) formant le corps de carte (20) étant fabriquées au moyen d'un procédé d'impression 3D ; et
- la fabrication d'un dispositif d'émission/de réception sans fil dans une couche prédéfinie par introduction de particules électroconductrices, de telle manière qu'une liaison électrique est établie entre le dispositif d'émission/de réception et le module à puce.

13. Procédé selon la revendication 11 ou 12, **caractérisé en ce que** des bandes magnétiques, des zones thermochromiques, des dispositions graphiques, des personnalisations optiques et/ou d'autres composants électroniques sont fabriqués dans des parties prédéfinies des couches.
